# EUROPEAN PATENT APPLICATION

(11) **EP 2 119 917 A1**
(43) Date of publication of application: **18.11.2009**
(21) Application number: 08156391.8
(22) Date of filing: 16.05.2008
(51) Int. Cl.: F04D 29/20, F04D 29/26, F01D 5/02, F16D 1/096

(54) **Connection arrangement, and centrifugal pump comprising such arrangement**

(71) Applicant: IHC Holland IE B.V., 3361 EP Sliedrecht (NL)
(72) Inventor: Zandee, Adriaan Hugo, 2584 RX, Den Haag (NL); Bronsveld, Peter Alexander, 3145 ES, Maassluis (NL)
(74) Representative: van Westenbrugge, Andries

(57) **Abstract**

A connecting arrangement comprises a shaft (2), a sleeve (14) provided with external screw thread (17) and mounted on the shaft (2), a rotation element (7) provided with internal screw thread (10) which is screwed onto the external screw thread (17) of the sleeve (14) from a first end, as well as locking means (18-21) for locking the rotation element (7) with respect to the shaft (2). The locking means (18-21) are provided at the end of the screw threads (10, 17) opposite the first end.

## Description

The invention is related to a connection arrangement comprising a shaft, a sleeve provided with external screw thread and mounted on the shaft, a rotation element provided with internal screw thread which is screwed onto the external screw thread of the sleeve from a first end, as well as locking means for locking the rotation element with respect to the shaft.

Such a connection arrangement is disclosed in NL-C-1.014.301. Said prior art connection arrangement has a sleeve which is shrink-fitted on the shaft with interposition of a slightly tapered bush. Said connection arrangement provides for the possibility of making the sleeve slip with respect to the shaft in the case of a torsional overload. A special, separate segmented ring, or so called split ring, with tapered outer surfaces is applied with the aim of locking the rotation element, which is carried out as an impeller, with respect to the shaft.

Said prior art connection arrangement has the disadvantage that the locking means are rather complicated. The segmented ring which is used for locking the rotational element with respect to the shaft has to be fitted by means of bolts which are screwed into screw threaded holes made for this purpose in the end face of the shaft. This implies furthermore that the end of the shaft should remain accessible for mounting or dismounting the bolts, also after the rotational element has been fitted on the shaft. Furthermore, having regard to the fact that several segments have to be applied between the end face of the shaft and an opposite face of the rotation element, the process of application is cumbersome.

The object of the invention is therefore to provide a connection arrangement of the type described before which lacks these disadvantages, and which provides a more efficient locking procedure. This object is achieved in that the locking means are provided at the end of the screw threads opposite the first end.

The locking means according to the invention are at a position which is remote from the end of the shaft. This has the advantage that the locking means can always be applied, even in cases in which the rotation element, after being fitted on the shaft, partly or fully covers the end of the shaft. This can for instance be the case in centrifugal pumps which have an impeller with a closed hub. Another advantage is a reduction of types of shafts since distinctions in thread profile, pitch, clockwise etc, are now realised in the sleeve. In the process of connecting the rotation element to the shaft, first of all the said rotation element is shifted up to the nominal position with respect to the shaft. Subsequently, the locking means are applied. Said locking means can be carried out in several ways; according to a preferred embodiment the locking means comprise a flange which is connected to the sleeve,, the rotation element being locked with respect to the flange. According to this embodiment, in the process of locking, internal forces are generated, in particular pre-stress forces, within the sleeve itself. This has the advantage that nor the shaft, nor the connection between the shaft, is loaded by these pre-stress forces. Thus, the sleeve can be designed and manufactured with the aim of providing the required strength and stiffness with respect to these pre-stress forces. Another advantage is that freedom for material choice is increased so that the shaft and sleeve can be optimised separately for e.g. hardness, ductility or as desired. Furthermore in case of damaged thread or wear, replacement of the only the sleeve is required.

Furthermore, the locking means may comprise a split ring which is positioned against the flange, said split ring being subjected to compressive axial pre-stress between the flange and the rotation element. In particular, the split ring may comprise at least three split ring parts. In order to maintain the proper position of the split ring, the split ring parts thereof may be connected to each other in a releasable fashion. Thus, by releasing the split ring part, the split ring itself can be removed for the purpose of withdrawing the rotation element from the shaft, e.g. for exchanging a damaged rotation element.

In particular, the locking means may comprise co-acting tapered locking surfaces, seen in a cross section according to a radial plane containing the axis of the shaft, and widening in radially outward direction. In this connection, the flange and the split ring may comprise facing co-acting tapered locking surfaces.

Furthermore, the face of the split ring which faces away from its tapered face and the opposite face of the rotation element, or of an intermediate element positioned between the split ring and the rotation element, may be oriented according to a plane perpendicular with respect to the axis of the shaft.

According to a preferred embodiment, the sleeve comprises a screw threaded sleeve part and a support ring part, said support ring part carrying the locking means. In this embodiment, the function of connecting the rotation element to the sleeve, and the function of pre-stressing and the locking the rotation element with respect to the sleeve are performed in different parts of the sleeve. Additionally, the sleeve may be used for further functions, such as for providing a seal between the shaft and the surrounding structure. To that end, the support ring part may carry sealing means, said sealing means comprising a seal bush which is pre-stressed between the rotation member and the split ring.

The connection between the rotational element, such as an impeller, and the shaft is obtained in the following way. First of all, the sleeve is mounted onto the shaft. Usually, the sleeve is press-fitted onto the shaft. Important is that the sleeve is in force-fitted connection with the shaft, for example shrink-fitting is a viable option as well. Next, the segmented ring is shifted onto the support ring part. Subsequently, the sealing bush is shifted onto the support ring part. Then, the rotational element is screwed onto the screwthreaded part of the sleeve until the desired position of the rotational element, and also of the sealing bush, is obtained and moreover until the desired pre-stress is obtained, also in the screwthreaded connection for locking the rotational element with respect to the sleeve.

Furthermore, an embodiment is preferred wherein the screw threaded sleeve part has a relatively small diameter and the support ring part has a relatively large diameter, and the shaft has a shaft portion with a corresponding relatively small diameter and an adjoining shaft portion with a corresponding relatively large diameter. In that case, the screw threaded sleeve part is fitted on the shaft portion with a relatively small diameter, and the support ring part is fitted on the shaft portion with the relatively large diameter. The large diameter shaft portion provides the required torsional stability for driving the rotational element, such as an impeller and the like.

The invention is also related to a centrifugal pump, comprising a housing, a shaft rotatably supported in said housing as well as an impeller supported on the shaft within the housing, wherein the rotor is connected to the shaft by means of a connection arrangement as described before, said connection arrangement comprising a sleeve provided with external screw thread mounted on the shaft, a rotation element provided with internal screw thread screwed onto the external screw thread of the sleeve from a first end, as well as locking means for locking the rotation element with respect to the shaft. According to the invention, the locking means are provided at the end of the screw threads opposite the first end.

The housing comprises counter sealing means which cooperate with the sealing means on the support ring part.

The invention will now be described further with reference to an embodiment of a centrifugal pump containing a connection arrangement as described before.
Figure 1 shows a longitudinal section through a centrifugal pump.
Figure 2 shows the enlarged detail II according to figure 1.
Figure 3 shows another embodiment of the detail II.

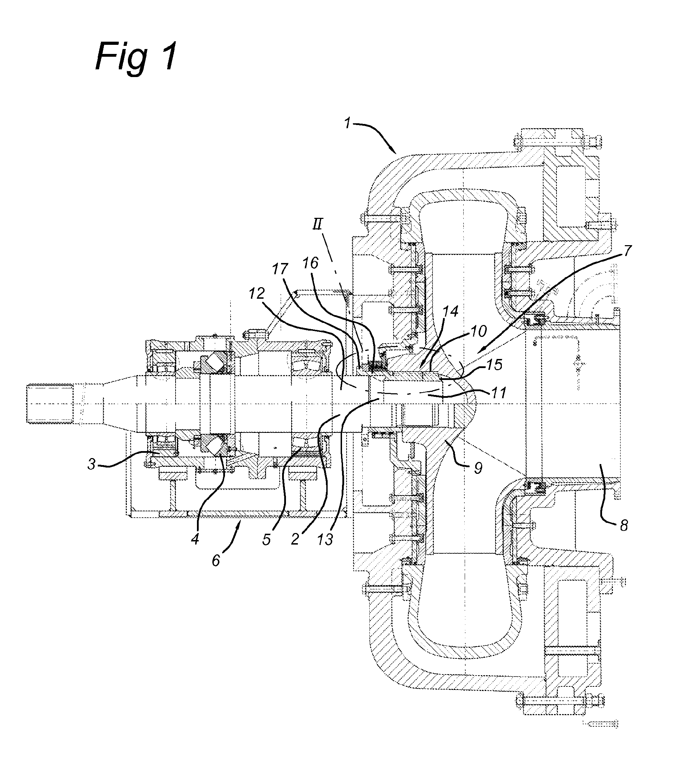

The centrifugal pump shown in figure 1 consists of a housing 1, a shaft 2 which by means of bearings 3, 4, 5 is rotatably supported with respect to a support device 6 and an impeller 7. The housing 1 has an axially oriented inlet 8 for the impeller, and a tangentially oriented outlet (not shown). The further lay out of a centrifugal pump is known, and a detailed description thereof has been omitted for this reason.

The impeller 7 has a closed hub 9, provided with an internal screw thread 10. The shaft 2 has a relatively small diameter portion 11, a relatively large diameter portion 12 and a conically shaped portion 13 in between. A sleeve 14 has been provided which consists of a sleeve part 15 press-fitted on the relatively small diameter shaft portion 11, and a support ring part 16 bridging the conically shaped shaft portion 13 and fitted on the relatively large diameter shaft portion 12.

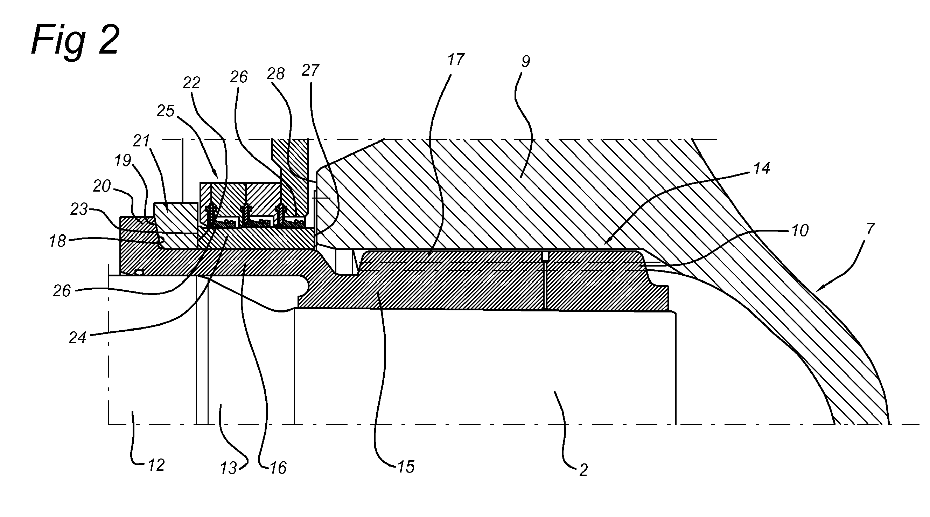

As shown in the enlarged detail II of figure 2, the sleeve part 15 has an external screw thread 17, onto which the internal screw thread 10 of the impeller 7 has been screwed. The supporting ring part 16 has an external flange 20, provided with a tapering surface 18 which faces the screw threaded sleeve part 15. Furthermore, segmented ring 21 has been provided, which has a similarly tapering surface 19 which abuts the opposite tapering surface 18 of the external flange 20. At its other end, the segmented ring 21 has a radially oriented opposite face 22. Said opposite face 22 of the segmented ring 21 bears against a similar radially oriented face 23 of the seal bush 24. Furthermore, said seal bush 24 has an opposite radially oriented face 27, which bears against the similarly radially oriented face 28 of the impeller 7.

The process of obtaining the connection between the impeller 7 and the shaft 2 as shown in figure 2, is carried out as follows. First of all, the sleeve 14, is press-fitted onto the shaft 2. Next the segmented ring 21 is shifted onto the support ring part 16 so that surface 19 of the segmented ring 21 and tapered surface 18 of the flange 20 abut. Subsequently, the sealing bush 24 is pushed onto the supporting ring part 16. Next, the hub 9 of the impeller 7 is screwed onto said sleeve 14 until the faces 27, 28 thereof touch each other. The hub 9 is screwed so far onto the sleeve 14, that its normal position is obtained. Subsequently the hub 9 is screwed further onto the sleeve, possibly beyond its nominal position, thereby generating a preload on the screw threads 10, 17 of the sleeve 14 and the hub 9. In this position, the ring segments of the ring 21 are locked with respect to each other, for instance by bolts or an auxiliary ring. The tapered surface 18 of the supporting ring part 16 and tapered surface of the segmented ring 21 are arranged to enable removal of the segmented ring 21 in case of a need to replace or remove the impeller 7 from the shaft 2.

The sealing bush 24 provides a sealing surface which is contacted by the lip seals 26. These lip seals 26 are connected to the housing 1 of the centrifugal pump and allow the rotational movement of the sealing bush 24 while maintaining a sealed condition of the housing interior.

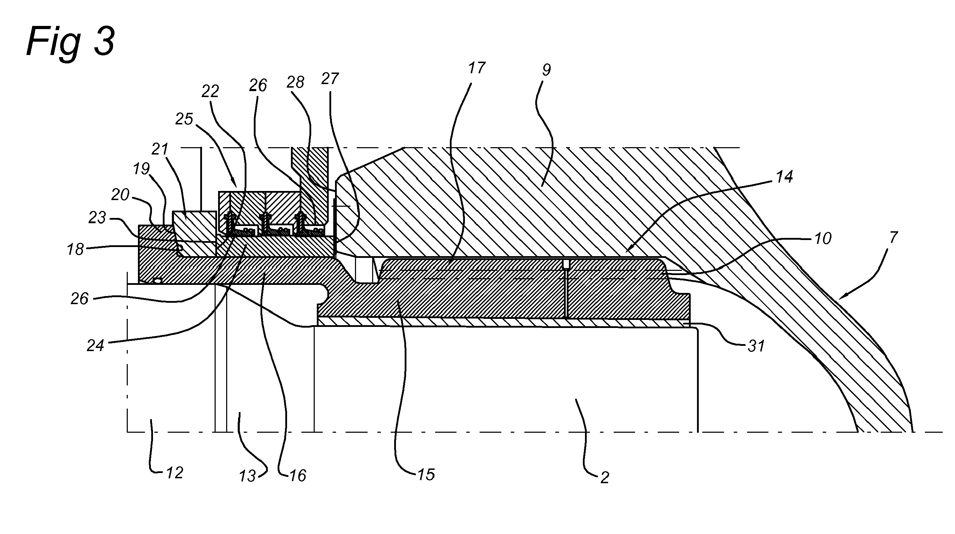

The embodiment according to figure 3 is to a large extent similar to the embodiment according to figure 2. However, a bushing 31 has been provided between the sleeve 14 and the shaft 2, which bushing provides a protection against overloading of the impeller 7. In case the impeller 7 is overloaded, the bushing 31 gives way and slips.

## Claims

1. Connecting arrangement comprising a shaft (2), a sleeve (14) provided with external screw thread (17) and mounted on the shaft (2), a rotation element (7) provided with internal screw thread (10) which is screwed onto the external screw thread (17) of the sleeve (14) from a first end, as well as locking means (18-21) for locking the rotation element (7) with respect to the shaft (2), **characterized in that** the locking means (18-21) are provided at the end of the screw threads (10, 17) opposite the first end.

2. Arrangement according to claim 1, wherein the locking means comprise a flange (20) of the sleeve (14), the rotation element (7) being locked with respect to the flange (20).

3. Arrangement according to claim 2, wherein the locking means comprise a split ring (21) which is positioned against the flange (20), said split ring (21) being subjected to compressive axial pre-stress forces between the flange (20) and the rotation element (7).

4. Arrangement according to claim 3, wherein the split ring (23) comprises at least three split ring parts.

5. Arrangement according to claim 4, wherein the split ring parts are connected to each other in a releasable fashion.

6. Arrangement according to any of claims 2-5, wherein the locking means comprise co-acting tapered locking surfaces (18, 19), seen in a cross section according to a radial plane which contains the axis of the shaft (2), and widening in radially outward direction.

7. Arrangement according to any of claims 3-6, wherein the flange (20) and the split ring (21) comprise facing co-acting tapered locking surfaces (18, 19).

8. Arrangement according to claim 7, wherein the face (22) of the split ring (21) which faces away from its tapered face (19) and the opposite face (23) of the rotation element (7), or of an intermediate element (24) positioned between the split ring (21) and the rotation element (7), are oriented according to a plane perpendicular with respect to the axis of the shaft (2).

9. Arrangement according to any of the preceding claims, wherein the sleeve (14) comprises a screw threaded sleeve part (15) and a support ring part (16), said support ring part (16) carrying the locking means (18-21).

10. Arrangement according to claim 8 and 9, wherein the support ring part (16) carries sealing means (25), said sealing means (25) comprising a seal bush (24) which is prestressed between the rotation member (7) and the split ring (21).

11. Arrangement according to claim 9 or 10, wherein the screw threaded sleeve part (15) has a relatively small diameter and the support ring part (16) has a relatively large diameter, the shaft (2) has a shaft portion (11) with a corresponding relatively small diameter and an adjoining shaft portion (12) with a corresponding relatively large diameter, the screw threaded sleeve part (15) being fitted on the shaft portion (11) with a relatively small diameter, and the support ring part (16) being fitted on the shaft portion (12) with the relatively large diameter.

12. Arrangement according to claim 11, wherein a conical shaft part (13) is accomodated between the relatively large diameter shaft portion (12) and the relatively small diameter shaft portion (11).

13. Arrangement according to any of the preceding claims, wherein a friction fit is provided between the sleeve (14) and the shaft (2).

14. Arrangement according to any of the preceding claims, wherein a bushing (31) is provided on the inner surface of the sleeve (14), said bushing (31) providing a friction fit between the sleeve (14) and the shaft (2).

15. Centrifugal pump, comprising a housing (1), a shaft (2) rotatably supported in said housing (2) as well as an impeller (7) supported on the shaft (2) within the housing (1), wherein the rotor (7) is connected to the shaft (2) by means of a connection arrangement according to any of the preceding claims, said connection arrangement comprising a sleeve (14) provided with external screw thread (10) and mounted on the shaft (2), the impeller (7) being provided with internal screw thread (17) screwed onto the external screw thread (10) of the sleeve (14) from a first end, as well as locking means (19, 20) for locking the impeller (7) with respect to the shaft (2), **characterized in that** the locking means (19, 20) are provided at the end of the screw threads (10, 17) opposite the first end.

16. Centrifugal pump according to claim 15, wherein the housing (1) comprises counter sealing means (25) which cooperate with the sealing means (24) on the support ring part (16).

17. Centrifugal pump according to claim 16, wherein the sealing means (25) comprise at least one lip seal (26).
